# FASCICULE DE BREVET EUROPEEN

(11) **EP 1 794 445 B1**
(45) Date de publication et mention de la délivrance du brevet: **18.05.2016**
(21) Numéro de dépôt: 05802732.7
(22) Date de dépôt: 22.09.2005
(51) Int. Cl.: F02N 11/08

(54) **PROCEDE DE COMMANDE D'UNE MACHINE ELECTRIQUE TOURNANTE**
VERFAHREN ZUR STEUERUNG EINER ELEKTRISCHEN ROTATIONSMASCHINE
METHOD OF CONTROLLING A ROTATING ELECTRICAL MACHINE

(30) Priorité: 23.09.2004 FR 0410096
(43) Date de publication de la demande: 13.06.2007
(73) Titulaire: VALEO EQUIPEMENTS ELECTRIQUES MOTEUR, 94017 Créteil Cedex (FR)
(72) Inventeur: LECOLE, Brice, F-75012 Paris (FR); LAURENCE, Magali, F-75012 Paris (FR)
(74) Mandataire: de Lambilly Delorme, Marie Pierre
(86) Numéro de dépôt international: PCT/FR2005/002352
(87) Numéro de publication internationale: WO 2006/032792

(56) Documents cités:
- EP-A- 1 333 174
- DE-B3- 10 211 463
- FR-A- 2 688 548
- FR-A- 2 816 891
- US-A1- 2003 150 417
- US-A1- 2004 089 258

## Description

### Domaine de l'invention

La présente invention concerne un procédé de commande d'une machine électrique tournante pour véhicule automobile, ladite machine étant destinée à fonctionner en mode démarreur pour démarrer un moteur thermique dudit véhicule. Elle concerne également un dispositif permettant la mise en oeuvre d'un tel procédé de commande.

### Etat de la technique

Le procédé de commande permet de mettre en oeuvre pour le moteur thermique un fonctionnement à coupure et démarrages (incluant les redémarrages) automatiques dudit moteur thermique, fonctionnement connu sous le terme anglo-saxon de « Stop and Go ». A cet effet, le procédé de commande pilote la machine électrique tournante pour démarrer automatiquement le moteur thermique après un arrêt du moteur thermique, ladite machine fonctionnant alors en mode démarreur.

Une telle machine électrique est couplée audit moteur thermique, au moyen d'une courroie par exemple, et comprend en général un stator et un rotor. Un courant appliqué au stator de la machine provoque la mise en rotation du rotor, lequel entraîne alors l'arbre du moteur thermique.

Une situation typique de fonctionnement en « Stop and Go » est celle de l'arrêt à un feu rouge. Lorsque le véhicule s'arrête au feu, le moteur thermique est automatiquement stoppé, puis, quand le feu devient vert, le moteur est redémarré notamment au moyen de la machine électrique à la suite de la détection de l'enfoncement de la pédale d'embrayage par le conducteur, cette action étant interprétée comme une demande de redémarrage. On comprend ainsi l'intérêt de ce fonctionnement en « Stop and Go » en terme d'économie d'énergie et de réduction de la pollution, surtout en milieu urbain.

Cependant, cette circonstance de mise en oeuvre du fonctionnement en « Stop an Go » reste très particulière et ne recouvre pas toutes les situations où un redémarrage peut être sollicité.

Par ailleurs il est connu par FR-2816891 un système de commande de démarrage et d'arrêt automatique d'un moteur thermique de véhicule. Ce système comprend des moyens de démarrage et d'arrêt du moteur, des capteurs d'information sur l'état de fonctionnement du véhicule, et des moyens de commande des moyens d'arrêt et de démarrage du moteur à partir des informations des capteurs. Les moyens de commande comportent un calculateur contenant un algorithme de commande du moteur agissant en fonction des données délivrées par les capteurs d'informations.

### Objet de l'invention

Aussi, un problème technique à résoudre par l'objet de la présente invention est de proposer un procédé de commande d'une machine électrique tournante pour véhicule automobile, ladite machine étant destinée à fonctionner en mode démarreur pour démarrer un moteur thermique dudit véhicule, qui permette de définir les conditions dans lesquelles un ordre de démarrage du moteur thermique du véhicule, initialement arrêté, est transmis à la machine électrique tournante.

Une solution au problème technique posé consiste, selon un premier objet de la présente invention, en un procédé selon la revendication 1.

Ainsi, l'invention prévoit deux grandes catégories de conditions de démarrage, à savoir lesdites conditions sécuritaires impératives qui doivent être vérifiées en permanence à tout moment car liées le plus souvent à des raisons de sécurité du véhicule, du conducteur ou d'autres personnes, et lesdites conditions préalables au démarrage qui ne sont vérifiées qu'au moment de la demande de démarrage de manière à s'assurer que rien ne s'oppose au démarrage du moteur thermique.

Selon des modes de réalisations préférentiels non limitatifs, la présente invention présente en outre les caractéristiques suivantes.
- La machine électrique tournante est destinée à fonctionner en mode générateur pour alimenter un réseau de bord dudit véhicule automobile. Ainsi, le procédé de commande permet de piloter une machine réversible telle qu'un alterno-démarreur, un tel alterno-démarreur cumulant ainsi la fonction classique d'alternateur dans lequel l'arbre du moteur thermique du véhicule entraîne le rotor de la machine de manière à produire un courant électrique dans le stator, et la fonction de démarreur.
- le procédé de commande selon l'invention comporte les étapes de :
   - en cas de test négatif sur les conditions sécuritaires, interdire ou interrompre à tout instant une exécution de ladite phase de démarrage, et
   - en cas de test négatif sur les conditions préalables, interdire une exécution de la phase de démarrage.

Ainsi, même si la phase de démarrage a démarré, il est possible de l'arrêter si un problème survient.
- Les conditions préalables ne sont plus vérifiées après l'ordre de démarrage donné à la suite d'une demande de démarrage, l'invention prévoyant même que, en cas de test positif, on maintient valides lesdites conditions préalables au démarrage pendant une durée de validité donnée. Ainsi, cet artifice permet par exemple d'effectuer plusieurs tentatives de démarrage même si une condition préalable n'est plus vérifiée.
- Cependant, en cas de perte de validité des conditions préalables de démarrage, on interrompt la phase de démarrage. Cela permet une gestion plus souple des conditions préalables. Ainsi par exemple on peut jouer sur la durée de validité donnée de manière à ce que un nombre déterminé uniquement de tentatives puisse être effectué.

Par ailleurs, l'invention distingue deux types de démarrages différents : les premiers démarrages, c'est-à-dire les démarrages classiques qui peuvent être faits moteur froid, et les redémarrages, c'est-à-dire après un phase d'arrêt, à un feu rouge par exemple.

L'invention a donc pour but de définir selon le type de démarrage demandé les conditions sécuritaires et préalables qui doivent être vérifiées et la manière dont sont gérées ces conditions par le procédé de commande conforme à l'invention.

Ainsi, selon des modes de réalisation préférentiels non limitatifs, l'invention comporte en outre les caractéristiques suivantes :
- Lorsque le démarrage est un premier démarrage, une condition sécuritaire est une durée minimale séparant deux ordres de démarrage consécutifs. Ainsi, cela permet de limiter les risques de surchauffe de la machine ou de l'électronique de la machine.
- Lorsque le démarrage est un premier démarrage, une condition préalable au démarrage est une durée minimale d'une action sur une clef de contact du véhicule. Ainsi, cela permet d'être sûr que le conducteur demande un démarrage.
- Lorsque le démarrage est un redémarrage, lesdites conditions sécuritaires sont, prises séparément ou en combinaison, une durée minimale entre deux ordres de redémarrage consécutifs et une position fermée d'un capot du véhicule. Ainsi, cela permet de limiter les risques de surchauffe de la machine ou de l'électronique de la machine. De plus, on ne redémarre pas si le capot est ouvert car cela pourrait être dangereux pour l'utilisateur.
- Par ailleurs, on prévoit d'invalider ladite condition sécuritaire de position fermée du capot du véhicule en cas d'une action sur la clef de contact du véhicule. Ainsi, cela permet ainsi à l'utilisateur du véhicule de vérifier s'il le désire son moteur lorsqu'il tourne.

L'invention distingue également deux types d'actions permettant d'enclencher un démarrage. Un type d'actions provenant du conducteur du véhicule, qu'elles soient intentionnelles ou non, et un type d'actions ne provenant pas du conducteur.
- Ainsi, selon un premier mode de réalisation non limitatif, lorsque le démarrage est un redémarrage, lesdites conditions préalables de démarrage sont déterminées par au moins une action intentionnelle du conducteur du véhicule.
- Ladite action intentionnelle est une action sur une clé de contact du véhicule pendant une durée minimale donnée, une action sur un moyen d'activation/désactivation de la commande de démarrage par la machine électrique, une action sur une pédale d'embrayage du véhicule ou une action sur une pédale d'accélérateur du véhicule.
- Selon un deuxième mode de réalisation non limitatif, lorsque le démarrage est un redémarrage, lesdites conditions préalables de démarrage sont déterminées par au moins une action involontaire du conducteur du véhicule.
- Ladite action involontaire est une ouverture de la porte du conducteur.
- Selon un troisième mode de réalisation non limitatif, lorsque le démarrage est un redémarrage, lesdites conditions préalables de démarrage sont déterminées sans action du conducteur.
- Lesdites conditions préalables sont, prises séparément ou en combinaison, une détection d'une vitesse du véhicule supérieure à une valeur donnée, une requête de redémarrage provenant d'un système de surveillance d'une batterie du véhicule, une requête de redémarrage fonction d'un système de climatisation du véhicule, et une requête de redémarrage fonction d'un système de freinage du véhicule.

L'invention prévoit en outre un démarrage en fonction du système de climatisation.
- On prévoit d'envoyer une requête de redémarrage du moteur thermique si le système de climatisation est mis en marche pendant une phase d'arrêt du moteur thermique, alors qu'il était éteint lors de l'arrêt. Ainsi, cela permet de mettre en route le système de climatisation immédiatement selon le souhait du conducteur.
- De plus, on prévoit d'interdire l'envoi d'une requête de redémarrage du moteur thermique pendant une durée donnée si le système de climatisation était en marche lors de l'arrêt du moteur thermique. Ainsi, cela évite d'avoir un arrêt et un allumage du système de climatisation trop rapprochés si la température augmente très vite, entraînant une gêne pour le conducteur.
- Par ailleurs, afin de remettre en marche la climatisation, on envoie une requête de redémarrage du moteur thermique à l'issue d'une durée d'arrêt donnée. Ainsi, cela permet au conducteur d'obtenir la climatisation même s'il la température habitacle n'a pas augmentée.

De plus, l'invention prend en compte différents modes de réalisation du système de climatisation selon qu'il comporte un certain type de capteur.
- Lorsque le système de climatisation comporte un capteur de température d'air en sortie d'un évaporateur du système de climatisation, on envoie une requête de redémarrage du moteur thermique si la température d'air pulsé est supérieure à une valeur donnée.
- Lorsque le système de climatisation comporte un capteur d'habitacle de véhicule, on envoie une requête de redémarrage du moteur thermique si la température de l'habitacle du véhicule augmente d'une valeur donnée après un arrêt du moteur thermique.

En outre, l'invention concerne également l'exécution des ordres de démarrage, et plus spécialement les redémarrages du moteur thermique demandés à la machine électrique.

En particulier, il est prévu par l'invention qu'un ordre de démarrage n'est pas exécuté si le moteur thermique est déjà démarré. Cette disposition présente l'avantage d'interdire un redémarrage à la machine électrique lorsque le moteur thermique a été préalablement démarré par un autre moyen. Dans ce cas, ladite machine réversible est mise en mode alternateur, sans passer par une phase de démarrage. Cette situation s'applique en particulier lorsque la machine électrique est un alterno-démarreur et que l'autre moyen est un démarreur classique additionnel.
Enfin, selon un mode de réalisation préféré de l'invention non limitatif, le procédé de commande comporte les étapes supplémentaires de :
- compter des ordres de démarrage au moyen d'un compteur,
- incrémenter d'une unité ledit compteur à chaque ordre de démarrage jusqu'à une valeur maximale au-delà de laquelle tout ordre de démarrage est interdit,
- et décrémenter ledit compteur d'une unité par tranche d'intervalle de temps donné.
De plus, on prévoit que deux ordres de démarrage consécutifs sont séparés par un intervalle de temps donné. Ainsi, on obtient de cette manière une gestion optimale des redémarrages successifs évitant tout risque de surchauffe de l'alterno-démarreur et des circuits électroniques.

Par ailleurs, on transmet l'ordre de démarrage à la machine électrique tournante lorsque le compteur est inférieur à la valeur maximale exclue, et transmet l'ordre de démarrage à un démarreur additionnel lorsque le compteur a atteint la valeur maximale. Ainsi, on évite ainsi tout risque de surchauffe. De plus, on évite de lancer la machine électrique tournante si des conditions optimales ne sont pas atteintes ou si ladite machine a un problème.

Selon un deuxième objet de l'invention, l'invention propose une machine électrique tournante réversible comprenant un dispositif de mise en oeuvre du procédé de commande selon l'une quelconque des caractéristiques précédentes.

Selon un troisième objet de l'invention, l'invention propose un dispositif de commande d'une machine électrique tournante pour véhicule automobile selon la revendication 24.

La description qui va suivre en regard des dessins annexés, donnés à titre d'exemples non limitatifs, fera bien comprendre en quoi consiste l'intention et comment elle peut être réalisée.

### Brève description des Figures

La Figure 1 est un schéma illustrant un véhicule automobile dans lequel est mis en oeuvre le procédé de commande selon l'invention.
La Figure 2 est un diagramme illustrant la gestion des conditions sécuritaires et préalables par le procédé de commande selon l'invention.
La Figure 3a est un chronogramme de l'état d'une condition préalable de la Figure 2 dans le cas d'une durée de validité courte.
La Figure 3b est un chronogramme de l'état d'une condition préalable de la Figure 2 dans le cas d'une durée de validité longue.
Les Figures 4 et 5 sont respectivement un diagramme et un chronogramme illustrant la gestion de conditions préalables de la Figure 2 liées à la climatisation du véhicule.
La Figure 6 est un diagramme des phases de fonctionnement d'un alterno-démarreur d'un véhicule comportant le procédé de commande conforme à l'invention.
La Figure 7 est un chronogramme illustrant une séquence d'ordres de démarrages successifs telle qu'organisée par le procédé de commande conforme à l'invention.

### Description détaillée de modes de réalisation préférentiels de l'invention

Dans la description qui suit, le procédé de commande selon l'invention est appliqué à une machine électrique tournante d'un véhicule telle qu'un alterno-démarreur. Bien entendu, le procédé de commande peut être appliqué à tout autre machine électrique tournante telle qu'un démarreur classique.

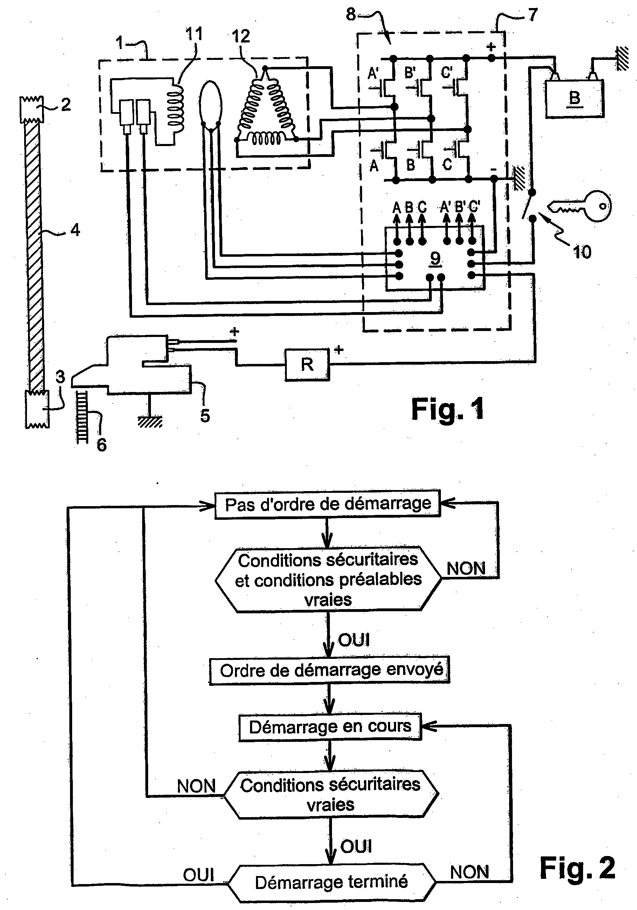

Selon la Figure 1, un véhicule comprend :
- un moteur thermique (non représenté),
- un alterno-démarreur séparé 1 comportant un rotor 11, un stator12, un arbre se terminant par une poulie 2 qui est reliée à une poulie 3 du vilebrequin du moteur thermique par l'intermédiaire d'une courroie 4. Cet alterno-démarreur est monté à la place que prend habituellement l'alternateur Cet alternodémarreur est monté à la place que prend habituellement l'alternateur. D'une manière générale, une machine électrique tournante réversible telle q'un alterno-démarreur cumule deux fonctions distinctes, à savoir, d'une part, la fonction classique d'alternateur lorsque l'arbre du moteur thermique entraîne le rotor 11 de la machine de manière à produire un courant électrique au stator, et, d'autre part, la fonction de démarreur lorsqu'à l'inverse, un courant appliqué au stator de la machine provoque la mise en rotation du rotor, lequel entraîne alors l'arbre du moteur thermique d'une manière analogue à un démarreur classique.

- optionnellement, un démarreur 5 classique additionnel dont le pignon est apte à engrener la denture d'une couronne 6 pour entraîner l'arbre du moteur thermique, et
- une électronique de pilotage 7 permettant de commander l'alterno-démarreur.

L'électronique de pilotage 7 comprend :
- un pont de transistors 8 qui est un convertisseur de puissance réversible et qui assure le pilotage en mode démarreur et le redressement synchrone en mode alternateur.
- une unité de gestion 9 qui commande les différents transistors du convertisseur 8 et gère notamment les différentes fonctions suivantes :
   - puissance en modes démarreur et alternateur
   - régulation en mode alternateur
   - transition du mode démarreur au mode alternateur

L'unité de gestion 9 est à cet effet alimenté par la tension de la batterie, référencée par B, à laquelle il est relié par l'intermédiaire d'un interrupteur 10 de contact du véhicule.

On notera que selon un mode de réalisation préférentiel non limitatif, la stratégie de démarrage selon le procédé de commande est téléchargée dans une mémoire flash ou eeprom d'un dispositif de commande tel qu'un microcontrôleur de l'alterno-démarreur. Le microcontrôleur se trouve dans l'unité de gestion 9 de l'alterno-démarreur et communique avec un bus du véhicule.

Selon un autre mode de réalisation non limitatif, cette stratégie peut être également téléchargée dans une mémoire d'un dispositif de commande compris dans le contrôle moteur ECU.

Sur la Figure 2 est montré un diagramme représentant des conditions sécuritaires et préalables gérées par le procédé de commande de la machine électrique réversible permettant de mettre en oeuvre la fonctionnalité « Stop and Go ».

Comme on peut le voir sur la Figure 2, deux types de conditions différentes sont pris en compte :
- les premières, qui seront nommées conditions sécuritaires par la suite, sont testées avant et pendant toute une phase de démarrage et peuvent interdire ou interrompre le processus pour des raisons de sécurité si elles ne sont plus vérifiées à la suite d'un test négatif.

Les secondes conditions, dites préalables au démarrage, ne sont testées qu'avant une phase de démarrage, c'est-à-dire avant l'envoi de l'ordre de démarrage et peuvent interdire son exécution en cas de test négatif, mais n'ont plus d'influence une fois que l'ordre a été donné.

On notera qu'une phase de démarrage est déterminée de la manière suivante :
- par un ordre de démarrage qui définit le début d'une phase de démarrage,
- par une « condition moteur démarré » vraie, qui définit la fin d'une phase de démarrage, ladite condition étant que la vitesse du moteur thermique ait atteint une vitesse déterminée pendant un temps déterminé, de préférence 700 tours minutes pendant au moins 200millisecondes.

Concernant les conditions préalables, l'invention propose, selon un mode de réalisation non limitatif, une disposition avantageuse selon lequel, après un premier test positif, à maintenir la validité d'une ou plusieurs de ces conditions pendant une durée donnée.

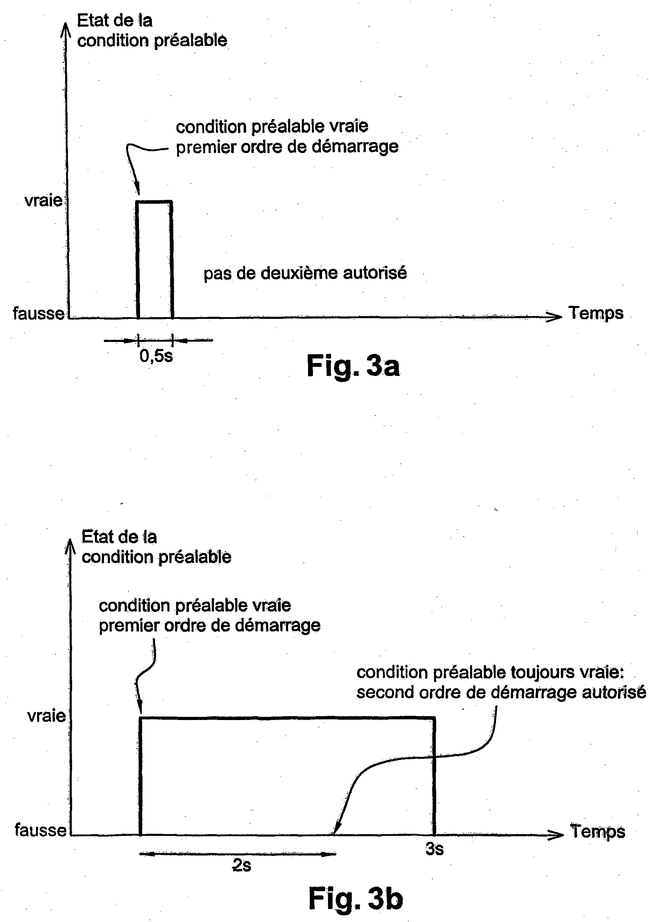

Un avantage de ce mode de fonctionnement apparaît dans l'hypothèse où le démarrage ne réussirait pas à la suite d'un mauvais contrôle de l'injection de carburant, de l'insuffisance du couple fourni pas l'alterno-démarreur, ou si le rotor est bloqué, par exemple. Ainsi par exemple, lorsqu'un deuxième ordre de démarrage est mise en oeuvre, ce deuxième ordre ne sera effectué que si les conditions préalables sont toujours vraies, conformément aux prescriptions générales de l'invention. On aura donc deux possibilités pour chaque condition préalable : faire en sorte qu'elle ne soit vraie qu'un court instant (0,5 seconde), comme le montre le diagramme de la Figure 3a, et dans ce cas un deuxième démarrage ne sera pas possible, ou faire en sorte qu'elle soit vraie pendant une durée de validité plus longue, 3 secondes par exemple, afin d'autoriser le deuxième ordre, comme indiqué sur le diagramme de la Figure 3b, la durée de validité pouvant ainsi varier selon le nombre de d'ordres consécutifs que l'on veut autoriser.

On notera que deux types de démarrages sont pris en considération dans le cadre de l'invention : les premiers démarrages, ou démarrages à froid classiques, et les redémarrages après avoir roulé (moteur chaud) et après une phase d'arrêt à la suite de la mise en oeuvre du fonctionnement en « Stop and Go » ou après avoir calé.

Les conditions sécuritaires et préalables qui viennent d'être présentées peuvent bien entendu varier selon qu'on envisage un premier démarrage ou un redémarrage.

Ainsi, selon des modes de réalisation non limitatifs, s'agissant d'un premier démarrage:
- une condition sécuritaire est d'avoir le réseau de bord du véhicule alimenté, c'est-à-dire la clé de contact du véhicule en position +APC « après contact » qui correspond à la première position de la clé de contact après introduction de la clef dans le barillet, et la chaîne de traction ouverte, c'est-à-dire le levier de vitesse en position neutre ou la pédale d'embrayage complètement appuyée. On notera que lorsqu'il existe la possibilité d'un démarrage dit mains libres, c'est-à-dire au moyen d'un badge par exemple, il faut dans ce cas que le badge soit introduit dans la fente prévue à cet effet pour identification.
- une autre condition sécuritaire est une certaine durée qui doit s'être écoulée entre deux ordres de démarrage consécutifs, cette durée pouvant varier de 1 seconde à plusieurs dizaines de secondes, en fonction du nombre d'ordres réalisés par exemple dans la minute précédente. Cette condition est nécessaire afin de limiter les risques de surchauffe de la machine électrique réversible ou de l'électronique associée.

Toujours dans le cadre d'un premier démarrage, une condition préalable envisagée par l'invention est une durée minimale d'une demande de démarrage, par exemple une demande du conducteur à l'aide de la clé de contact en position démarrage pendant au moins 100 millisecondes. On s'assure ainsi que le conducteur veut réellement démarrer.

Dans le cas d'un démarrage mains libres, une condition préalable envisagée est le fait que le conducteur appuie sur le bouton de démarrage prévu à cet effet.

Par ailleurs, selon des modes de réalisation non limitatifs, pour une demande de redémarrage :
- des conditions sécuritairés prévues par l'invention sont, prises séparément ou en combinaison,
   - une durée minimale entre deux ordres de redémarrage consécutifs, dans les mêmes termes que ceux exposés plus haut en référence aux premiers démarrages,
   - la position fermée d'un capot du véhicule, ceci pour éviter une remise en route du moteur thermique effectuée de manière intempestive alors qu'une personne est en train d'intervenir sur le moteur, capot ouvert. On notera que préférentiellement, cette deuxième condition sécuritaire est cependant invalidée (on ne l'a prend plus en compte) si le conducteur actionne sa clé de contact (clef en position démarrage +DEM) ou utilise son badge mains libres et appui sur le bouton de démarrage prévu à cet effet.
   Bien entendu, dans ce cas, il faut également que le système du réseau de bord soit alimenté dans les mêmes termes que ceux exposés plus haut en référence aux premiers démarrages.
- Concernant les conditions préalables à un redémarrage, on peut distinguer trois grandes catégories, à savoir, des conditions déterminées par au moins une action intentionnelle du conducteur, des conditions déterminées par au moins une action involontaire du conducteur, et des conditions déterminées sans action du conducteur.

Les actions intentionnelles du conducteur sont, selon des modes de réalisation non limitatifs :
- une action sur la clé de contact du véhicule de la part de l'utilisateur (clef en position démarrage +DEM) pendant une durée minimale donnée (de préférence 100 ms au moins),
- une action sur un moyen d'activation/désactivation de la commande de démarrage par la machine électrique. Dans un exemple non limitatif, ce moyen est un bouton sur le réseau de bord du véhicule permettant d'inhiber la fonctionnalité « stop and go »,

- une action sur une pédale d'embrayage du véhicule (enfoncement à plus de 90%),
- ou une action sur une pédale d'accélérateur du véhicule (enfoncement à plus de 10%).

Les actions involontaires du conducteur sont selon un mode de réalisation non limitatif :
- une ouverture de la porte du conducteur, ceci pour éviter que le conducteur sorte du véhicule croyant que le moteur est coupé alors qu'il se trouve dans une phase d'arrêt.

On notera qu'une phase d'arrêt est déterminé par :
- un ordre d'arrêt envoyé à une unité de contrôle du moteur thermique qui définit le début de la phase d'arrêt, et
- une vitesse moteur thermique inférieure à un certain nombre de tours minutes qui définit que le moteur est arrêté.

On comprend que par action involontaire du conducteur, on entend une action du conducteur par laquelle ledit conducteur ne désire pas explicitement demander un démarrage (y compris redémarrage) du moteur thermique de son véhicule.

Les conditions préalables de redémarrage n'impliquant aucune action du conducteur sont, selon des modes de réalisation non imitatifs, prises séparément ou en combinaison:
- une détection d'une vitesse du véhicule supérieure à une valeur donnée, 6 km/h par exemple, cette condition étant utile si le véhicule se trouve sur une pente et avance seul,
- une requête de redémarrage de la part du système de surveillance de la batterie : si l'état de charge de la batterie se dégrade trop pendant une phase d'arrêt, le véhicule doit redémarrer avant que la batterie ne soit plus en mesure de fournir l'énergie nécessaire au démarrage et au consommateurs du véhicule,
- une requête de redémarrage liée au système de freinage du véhicule, par exemple s'il y a perte d'assistance au freinage due à une fuite du liquide de frein; le fait de redémarrer le moteur thermique permet d'alimenter le système de freinage pour avoir la puissance nécessaire pour freiner correctement en cas de besoin, et
- une requête de redémarrage dans le but d'assurer le confort du conducteur liée au système de climatisation du véhicule, ce système ne pouvant fonctionner si le moteur thermique est arrêté.

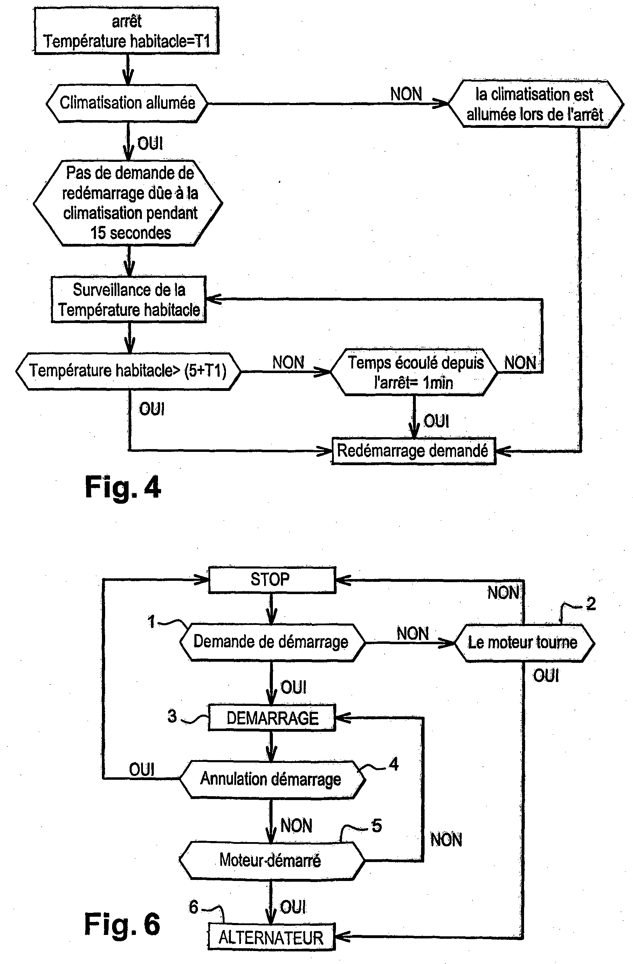

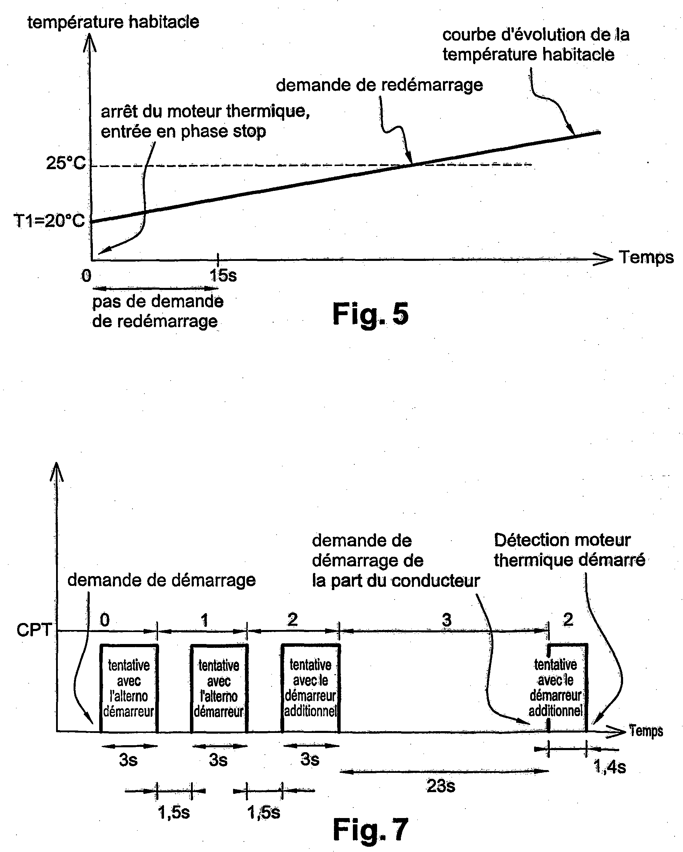

Un diagramme de commande des conditions préalables liées au système de climatisation ainsi qu'un chronogramme correspondant sont donnés aux Figures 4 et 5 selon un mode de réalisation préférentiel.

Dans cet exemple, une requête de redémarrage est faite si le conducteur allume la climatisation pendant la phase d'arrêt alors qu'elle était éteinte lors de l'arrêt ; on peut en effet penser que si cette action est effectuée, le conducteur souhaite que la climatisation soit opérationnelle immédiatement.

Si la climatisation était allumée lors de l'arrêt, toute requête de redémarrage envoyée par le système de climatisation (indépendamment donc de toute action du conducteur) est inhibée pendant 15 secondes. Cela évite de surprendre l'utilisateur. En effet, on évite d'arrêter et de démarrer le moteur thermique trop rapidement.

De plus, en fonction du type de système de climatisation, on prévoit dans un mode de réalisation non limitatif, des conditions préalables de redémarrage spécifiques suivantes.

Dans le cas d'un système de climatisation comprenant un capteur disposé en sortie d'un évaporateur du système de climatisation, ledit évaporateur permettant de refroidir l'air, et ledit capteur permettant de capter la température de l'air pulsé en dehors dudit évaporateur, si la température dudit air est supérieure à une valeur donnée, de préférence 7 degrés Celsius, on lance une requête de redémarrage.

Dans le cas d'un système de climatisation comprenant un capteur d'habitacle de voiture, si la température augmente de plus de 5 degrés Celsius par rapport à la température T1 au moment de l'arrêt, on lance une requête de redémarrage. Comme indiqué sur l'exemple de la Figure 5, on interdit pendant 15 secondes un redémarrage quelque soit la température habitacle, puis on lance une requête un redémarrage quand la température habitacle est supérieure à 25 degrés, la température T1 au moment de l'arrêt étant à 20 degrés.

En outre, si la climatisation était allumée avant une phase d'arrêt, le redémarrage est automatiquement demandé, quelque soit le type de système de climatisation, à l'issue d'une durée d'arrêt donnée, une minute par exemple. Préférentiellement, la durée d'arrêt est dépendante de la température extérieure, on applique ainsi ladite durée en fonction d'un tableau de correspondance. On peut en effet supposer que le conducteur veut avoir accès à la climatisation même si la température d'habitacle ou de l'air pulsé n'a pas trop augmenté.

Après avoir établi les différentes conditions de démarrage testées par le procédé de commande de la machine électrique selon l'invention, il convient maintenant de présenter les différents modes de fonctionnement de l'alterno-démarreur lors d'une demande de démarrage, ces modes de fonctionnement étant également gérés par le procédé de commande, objet de l'invention.

Se référant maintenant à la Figure 6, on voit que trois modes de fonctionnement sont considérés : le mode « STOP », le mode « DEMARRAGE » et le mode « ALTERNATEUR ».
- En mode « STOP », moteur thermique arrêté, aucune action spécifique n'est effectuée,
- En mode « DEMARRAGE », l'alterno-démarreur est utilisé en moteur pour démarrer le moteur thermique, et
- En mode « ALTERNATEUR », l'alterno-démarreur est utilisé en générateur et fournit de l'énergie au véhicule.

A partir d'une phase d'arrêt « mode STOP », on effectue les étapes suivantes :

Dans une **première étape 1),** on vérifie toutes les conditions sécuritaires et préalables comme exposées précédemment. Si elles sont toutes vérifiées, alors on a une « demande de démarrage ».

Dans une **deuxième étape 2),** si on n'a aucune demande de démarrage, on vérifie que le moteur thermique tourne ou non. La condition « le moteur tourne » est vraie si le moteur thermique atteint une vitesse suffisante pendant un temps suffisant ; par exemple, si sa vitesse est restée supérieure à 500 tours minutes pendant au moins 2 secondes. Le temps de 2 secondes permet de n'avoir aucun doute sur le démarrage. La demande de démarrage par l'alterno-démarreur n'est alors pas exécutée.

Cette transition est nécessaire pour gérer les démarrages effectués sans ordre explicite à l'alterno-démarreur, par exemple un démarrage à l'aide du démarreur classique traditionnel, ou un démarrage en pente. Dans ces cas, le moteur thermique a démarré tout seul sans être géré par l'alterno-démarreur. On notera que lorsque le moteur tourne, on passe en mode « ALTENATEUR » telle qu'indiqué à l'**étape 6)** comme si l'alterno-démarreur avait donné lui-même l'ordre de passer dans ce mode.

Dans une **troisième étape 3),** correspondant à l'étape « DEMARRAGE » : un ordre de démarrage est lancé.

Dans le cas d'un premier démarrage, dans un mode de réalisation non limitatif, l'ordre est envoyé à l'alterno-démarreur si la température du moteur thermique est supérieure à une valeur déterminée, par exemple Odegrés Celsius et si la fonctionnalité « Stop and Go » est autorisée par le conducteur au moyen d'un bouton prévu à cet effet. Dans le cas contraire, l'ordre est envoyé au démarreur classique additionnel s'il est disponible.

Par contre, dans le cas d'un redémarrage, l'ordre est de préférence toujours envoyé à l'alterno-démarreur sauf en cas de problème comme décrit en détail plus loin. A ce moment, le rotor de la machine électrique est mis en rotation ce qui va permettre de démarrer le moteur thermique.

Dans **une quatrième étape 4),** on teste si on a une annulation de démarrage. Une « annulation de démarrage » est obtenue, par exemple, si on relâche la pédale d'embrayage avant que le moteur ait vraiment démarré ou en cas d'interdiction de démarrage par l'alterno-démarreur comme on le verra en détail plus loin dans la description à l'occasion de la mise en place d'un compteur CPT. Si on a une annulation de démarrage, on repasse en phase d'arrêt « STOP ».

Dans le cas contraire, dans une **cinquième étape 5),** on vérifie si le moteur a démarré ou non. La condition « moteur démarré » est vraie si le moteur thermique atteint une vitesse suffisante pendant un temps suffisant ; par exemple, si sa vitesse est restée supérieure à 700 tours minutes pendant au moins 200 millisecondes. On notera que la vitesse du moteur thermique est en général égale au tiers de la vitesse de l'alterno-démarreur.

On notera par ailleurs qu'il est avantageux de surveiller la vitesse du moteur thermique et non celle de l'alterno-démarreur pour s'affranchir de toutes les défaillances possibles de la courroie reliant le moteur thermique à l'alterno-démarreur. En effet, si la courroie casse ou glisse, le moteur thermique n'est plus entraîné tandis que l'alterno-démarreur pourrait continuer à tourner « dans le vide ».

Si la condition « moteur démarré » est vraie, on passe à **la sixième étape 6),** l'alterno-démarreur se retrouve en mode ALTERNATEUR comme indiqué sur la Figure 6.

Dans le cas contraire, si, après 3 secondes après l'envoi d'un ordre de démarrage, la condition « moteur démarré » n'est pas vraie, ou si on détecte immédiatement un défaut (rotor bloqué, surchauffe de l'électronique ou de l'alterno-démarreur, mauvais établissement du courant dans le rotor, tension réseau trop faible ou trop forte...), on considère que le démarrage a échoué et on retourne à la **troisième étape 3)** de « DEMARRAGE » pour essayer d'effectuer de nouveau un redémarrage.

Cependant, pour éviter tout risque de surchauffe de la machine électrique et notamment de son unité de gestion 9, le procédé de commande selon l'invention prévoit un mécanisme de gestion du nombre d'ordres de démarrage envoyés est prévu selon un mode de réalisation non limitatif. Après chaque démarrage (y compris un premier démarrage), mauvais ou non, un compteur CPT est incrémenté. En fonction de la valeur de ce compteur, le démarrage ne sera pas géré de la même façon : au-delà d'une valeur maximale, tout ordre de démarrage par l'alterno-démarreur -est interdit. Dans l'exemple suivant cette valeur maximale est prise égale à 2.
- Si le compteur vaut 0 (aucun ordre de démarrage lancé jusqu'à présent), le démarrage est réalisé à l'aide de l'alterno-démarreur avec des paramètres qui visent à minimiser le temps de démarrage, par exemple avec un temps de pré-magnétisation du rotor choisi qui tend à être le plus court possible, c'est-à-dire le temps pendant lequel le maximum de courant est envoyé dans le rotor pour le magnétiser avant de pouvoir démarrer effectivement.
- Si le compteur vaut 1 (un ordre de démarrage déjà lancé), on essaie de démarrer toujours avec l'alterno-démarreur, mais certains paramètres peuvent être modifiés pour optimiser les chances de réussite, quitte à augmenter la durée du démarrage. On peut par exemple augmenter le temps de prémagnétisation du rotor pour s'assurer d'obtenir le couple maximal.
- Si le compteur vaut 2 (deux ordres déjà lancés), on essaie de démarrer à l'aide d'un autre moyen, par exemple du démarreur classique additionnel, s'il est disponible. En effet, il est possible que dans certaines conditions défavorables à l'alterno-démarreur, moteur froid par exemple, le démarreur additionnel soit plus approprié pour démarrer le moteur thermique. On notera que l'ordre de démarrage est envoyé au démarreur classique 5 par l'unité de gestion 9, par exemple par l'intermédiaire d'un relais R entre l'unité de gestion 9 et le démarreur classique 5 tel qu'indiqué à la Figure 1.

Par ailleurs, quelle que soit la valeur du compteur, on attend préférentiellement un intervalle de temps, par exemple d'au moins 1,5 secondes entre deux ordres de démarrages, cela afin d'éviter les surchauffes électroniques au niveau de l'alterno-démarreur.

Après le dernier ordre, tout nouvel ordre de démarrage est interdit, à savoir que la condition « annulation de démarrage » de la Figure 6 devient vraie et donc on revient à la phase d'arrêt « STOP » comme indiqué à la Figure 6.

Enfin, selon un mode de réalisation préférentiel, le compteur CPT est systématiquement décrémenté d'une unité par tranche d'intervalle de temps donné, par exemple toutes les 20 secondes (condition « annulation de démarrage » fausse). On peut ainsi tenter à nouveau un démarrage (redémarrage compris) après 20 secondes. Ainsi, par exemple cela peut s'appliquer lorsque un démarrage a échoué au moyen du démarreur classique. Dans ce cas, au bout de 20 secondes après la dernière tentative de démarrage (CPT = 3), on peut réessayer de démarrer avec le démarreur et au bout de 40 secondes avec l'alterno-démarreur.

Ce mécanisme est avantageux, en particulier en cas de démarrage manqué, pour minimiser l'impact sur le conducteur: tant que la demande de démarrage est présente, c'est-à-dire par exemple tant que le système de climatisation a envoyé une requête de démarrage et que toutes les condition sécuritaires et préalables nécessaires sont vraies, on peut enchaîner les ordres automatiquement de manière transparente pour le conducteur.

De plus, dans un mode de réalisation non limitatif, dans le cas de trois échecs consécutifs, et donc d'une pause d'au moins 20 secondes avant toute autre envoi d'ordre de démarrage, on peut envisager qu'un autre ordre ne soit possible qu'après une demande explicite du conducteur selon une action intentionnelle comme définit précédemment, par exemple par une action sur la clé ou sur l'une des pédales..., de manière à ne pas démarrer de manière impromptue alors que le conducteur n'y est pas préparé, et ce bien qu'il y ait une « demande de démarrage », c'est-à-dire que toutes les conditions sécuritaires et préalables sont vraies.

Le chronogramme de la Figure 7 montre l'exemple de trois ordres de démarrage consécutifs manquées à cause d'une durée de 3 secondes écoulée avant que la vitesse du moteur thermique n'ait atteint les 700 tours minute requis, suivie d'une pause de 23 secondes, et d'une autre tentative après l'action explicite du conducteur.

La pause n'ayant été que de 23 secondes, le compteur n'a été décrémenté qu'une fois; il vaut donc 2 au moment du dernier ordre de démarrage, lequel démarrage est donc réalisé à l'aide du démarreur additionnel.

Enfin dans une sixième étape 6), lorsque le moteur est démarré, on passe en mode ALTERNATEUR.

Bien entendu, dans le cadre de l'invention, pour avoir accès à certaines informations telles que la température habitacle, position des pédales d'embrayage, de frein, d'accélération, position boîte de vitesse, position clef de contact etc... des capteurs sont utilisés.

## Revendications

1. Procédé de commande d'une machine électrique tournante pour véhicule automobile, ladite machine étant destinée à fonctionner en mode démarreur pour démarrer un moteur thermique dudit véhicule, **caractérisé en ce qu'**il comporte les étapes de :
- tester, avant ladite phase de démarrage, des conditions dites préalables au démarrage, qui ne sont vérifiées qu'au moment de la demande de démarrage, et
en cas de test négatif sur lesdites conditions préalables, interdire une exécution de la phase de démarrage,
en cas de test positif sur lesdites conditions préalables, maintenir valides les conditions préalables au démarrage pendant une durée de validité donnée.
- tester, avant et pendant toute une phase de démarrage, des conditions dites sécuritaires, qui doivent être vérifiées en permanence, et
en cas de test négatif sur lesdites conditions sécuritaires, interdire ou interrompre à tout instant une exécution de ladite phase de démarrage.

2. Procédé de commande selon la revendication 1, ***caractérisé en ce que*** la machine électrique tournante est destinée à fonctionner en mode générateur pour alimenter un réseau de bord dudit véhicule automobile.

3. Procédé de commande selon l'une quelconque des revendications précédentes, ***caractérisé en ce que*** lorsque le démarrage est un premier démarrage, une condition sécuritaire est une durée minimale séparant deux ordres de démarrage consécutifs.

4. Procédé de commande selon l'une quelconque des revendications précédentes, ***caractérisé en ce que*** lorsque le démarrage est un premier démarrage, une condition préalable au démarrage est une durée minimale d'une action sur une clef de contact du véhicule.

5. Procédé de commande selon l'une quelconque des revendications précédentes, ***caractérisé en ce que*** lorsque le démarrage est un redémarrage, lesdites conditions sécuritaires sont, prises séparément ou en combinaison, une durée minimale entre deux ordres de redémarrage consécutifs et une position fermée d'un capot du véhicule.

6. Procédé de commande selon la revendication 5, ***caractérisé en ce qu'**il* comporte une étape supplémentaire d'invalider ladite condition sécuritaire de position fermée du capot du véhicule en cas d'une action sur une clé de contact du véhicule.

7. Procédé de commande selon l'une quelconque des revendications précédentes, ***caractérisé en ce que*** lorsque le démarrage est un redémarrage, lesdites conditions préalables de démarrage sont déterminées par au moins une action intentionnelle du conducteur du véhicule.

8. Procédé de commande selon la revendication 7, ***caractérisé en ce que*** ladite action intentionnelle est une action sur une clé de contact du véhicule pendant une durée minimale donnée, une action sur un moyen d'activation/désactivation de la commande de démarrage par la machine électrique, une action sur une pédale d'embrayage du véhicule ou une action sur une pédale d'accélérateur du véhicule.

9. Procédé de commande selon l'une quelconque des revendications 1 à 7, ***caractérisé en ce que*** lorsque le démarrage est un redémarrage, lesdites conditions préalables de démarrage sont déterminées par au moins une action involontaire du conducteur du véhicule.

10. Procédé de commande selon la revendication 9, ***caractérisé en ce que*** ladite action involontaire est une ouverture de la porte du conducteur.

11. Procédé de commande selon l'une quelconque des revendications 1 à 7, ***caractérisé en ce que*** lorsque le démarrage est un redémarrage, lesdites conditions préalables de démarrage sont déterminées sans action du conducteur.

12. Procédé de commande selon la revendication 11, ***caractérisé en ce que*** 12. lesdites conditions préalables sont, prises séparément ou en combinaison, une détection d'une vitesse du véhicule supérieure à une valeur donnée, une requête de redémarrage provenant d'un système de surveillance d'une batterie du véhicule, une requête de redémarrage fonction d'un système de climatisation du véhicule, et une requête de redémarrage fonction d'un système de freinage du véhicule.

13. Procédé de commande selon la revendication 12, ***caractérisé en ce qu'**il* comporte une étape supplémentaire d'envoyer une requête de redémarrage le moteur thermique si le système de climatisation est mis en marche pendant une phase d'arrêt du moteur thermique, alors qu'il était éteint lors de l'arrêt.

14. Procédé de commande selon la revendication 12, ***caractérisé en ce qu'***il comporte une étape supplémentaire d'interdire l'envoi d'une requête de redémarrage du moteur thermique pendant une durée donnée si le système de climatisation était en marche lors de l'arrêt du moteur thermique.

15. Procédé de commande selon la revendication 14, ***caractérisé en ce que*** le système de climatisation comporte un capteur de température d'air en sortie d'un évaporateur du système de climatisation, et **en ce que** ledit procédé comporte une étape supplémentaire d'envoyer une requête de redémarrage le moteur thermique si la température dudit air en sortie de l'évaporateur est supérieure à une valeur donnée.

16. Procédé de commande selon la revendication 14, ***caractérisé en ce qu'**il comporte* une étape supplémentaire d'envoyer une requête de redémarrage du moteur thermique si la température de l'habitacle du véhicule augmente d'une valeur donnée après un arrêt du moteur thermique.

17. Procédé de commande selon la revendication 14, *caractérisé en ce qu*'il comporte une étape supplémentaire d'envoyer une requête de redémarrage du moteur thermique à l'issue d'une durée d'arrêt donnée.

18. Procédé de commande selon l'une quelconque des revendications précédentes, ***caractérisé en ce qu'***un ordre de démarrage n'est pas exécuté si le moteur thermique est déjà démarré.

19. Procédé de commande selon la revendication 18, *caractérisé en ce qu*'il comporte une étape supplémentaire de configurer ladite machine en mode générateur si le moteur thermique est déjà démarré.

20. Procédé de commande selon l'une quelconque des revendications précédentes, *caractérisé en ce qu*'il comporte une étape supplémentaire de :
- compter des ordres de démarrage au moyen d'un compteur,
- incrémenter d'une unité ledit compteur à chaque ordre de démarrage jusqu'à une valeur maximale au-delà de laquelle tout ordre de démarrage est interdit,
- et décrémenter ledit compteur d'une unité par tranche d'intervalle de temps donné.

21. Procédé de commande selon la revendication 20, ***caractérisé en ce que*** deux ordres de démarrage consécutifs sont séparés par un intervalle de temps donné. 20.

22. Procédé de commande selon l'une des revendications 20 ou 21, *caractérisé en ce qu*'il comporte une étape supplémentaire de :
- transmettre l'ordre de démarrage à la machine électrique tournante lorsque le compteur est inférieur à la valeur maximale exclue.

23. Procédé de commande selon l'une des revendications 20 à 22, *caractérisé en ce qu*'il comporte une étape supplémentaire de :
- transmettre l'ordre de démarrage à un démarreur additionnel lorsque le compteur a atteint la valeur maximale.

24. Dispositif de commande d'une machine électrique tournante pour véhicule automobile, ladite machine étant destinée à fonctionner en mode démarreur pour démarrer un moteur thermique dudit véhicule, **caractérisé en ce qu'**il comporte :
- des premiers moyens pour tester, avant ladite phase de démarrage, des conditions dites préalables au démarrage, qui ne sont vérifiées qu'au moment de la demande de démarrage,
lesdits premiers moyens étant aptes à interdire une exécution de la phase de démarrage en cas de test négatif sur lesdites conditions préalables, et à maintenir valides les conditions préalables au démarrage pendant une durée de validité donnée en cas de test positif sur lesdites conditions préalables,
- des deuxièmes moyens pour tester, avant et pendant toute une phase de démarrage, des conditions dites sécuritaires, qui doivent être vérifiées en permanence, et
lesdits deuxième moyens étant aptes à interdire ou interrompre à tout instant une exécution de ladite phase de démarrage en cas de test négatif sur lesdites conditions sécuritaires.

25. Machine électrique tournante réversible comprenant un dispositif de mise en oeuvre du procédé selon les revendications 1 à 23.

## Patentansprüche

1. Verfahren zum Steuern einer drehenden elektrischen Maschine für Kraftfahrzeug, wobei die Maschine dazu bestimmt ist, in einer Starterbetriebsart zu arbeiten, um eine Brennkraftmaschine des Fahrzeugs zu starten, **dadurch gekennzeichnet, dass** es die folgenden Schritte umfasst:
- vor der Startphase Prüfen der sogenannten Bedingungen vor dem Starten, die nur zum Zeitpunkt der Startanforderung verifiziert werden, und
im Fall einer negativen Prüfung der Vorbedingungen Verbieten einer Ausführung der Startphase und
im Fall einer positiven Prüfung der Vorbedingungen Aufrechterhalten der Gültigkeit der Bedingungen vor dem Starten während einer gegebenen Gültigkeitsdauer,
- Prüfen vor und während einer Startphase sogenannter Sicherheitsbedingungen, die ständig verifiziert werden müssen, und
im Fall einer negativen Prüfung der Sicherheitsbedingungen jederzeit Verbieten oder Unterbrechen einer Ausführung der Startphase.

2. Steuerverfahren nach Anspruch 1, **dadurch gekennzeichnet, dass** die drehende elektrische Maschine dazu bestimmt ist, in einer Generatorbetriebsart zu arbeiten, um ein Bordnetz des Kraftfahrzeugs zu versorgen.

3. Steuerverfahren nach einem der vorhergehenden Ansprüche, **dadurch gekennzeichnet, dass** dann, wenn das Starten ein erstes Starten ist, eine Sicherheitsbedingung eine minimale Dauer ist, die zwei aufeinander folgende Startbefehle trennt.

4. Steuerverfahren nach einem der vorhergehenden Ansprüche, **dadurch gekennzeichnet, dass** dann, wenn das Starten ein erstes Starten ist, eine Bedingung vor dem Starten eine minimale Dauer einer Aktion an einem Zündschlüssel des Fahrzeugs ist.

5. Steuerverfahren nach einem der vorhergehenden Ansprüche, **dadurch gekennzeichnet, dass** dann, wenn das Starten ein erneutes Starten ist, die Sicherheitsbedingungen getrennt oder in Kombination eine minimale Dauer zwischen zwei aufeinander folgenden Neustartbefehlen und eine geschlossene Stellung einer Motorhaube des Fahrzeugs sind.

6. Steuerverfahren nach Anspruch 5, **dadurch gekennzeichnet, dass** es einen zusätzlichen Schritt des Erklärens für ungültig der Sicherheitsbedingung der geschlossenen Stellung der Motorhaube des Fahrzeugs im Fall einer Aktion an einem Zündschlüssel des Fahrzeugs umfasst.

7. Steuerverfahren nach einem der vorhergehenden Ansprüche, **dadurch gekennzeichnet, dass** dann, wenn das Starten ein erneutes Starten ist, die Bedingungen vor dem Starten durch wenigstens eine absichtliche Aktion des Fahrzeugführers bestimmt werden.

8. Steuerverfahren nach Anspruch 7, **dadurch gekennzeichnet, dass** die absichtliche Aktion eine Aktion an einem Zündschlüssel des Fahrzeugs während einer gegebenen minimalen Dauer, eine Aktion an einem Aktivierungs/Deaktivierungsmittel für die Steuerung des Startens durch die elektrische Maschine, eine Aktion an einem Kupplungspedal des Fahrzeugs oder eine Aktion an einem Fahrpedal des Fahrzeugs ist.

9. Steuerverfahren nach einem der Ansprüche 1 bis 7, **dadurch gekennzeichnet, dass** dann, wenn das Starten ein erneutes Starten ist, die Bedingungen vor dem Starten durch wenigstens eine unabsichtliche Aktion des Fahrzeugführers bestimmt werden.

10. Steuerverfahren nach Anspruch 9, **dadurch gekennzeichnet, dass** die unabsichtliche Aktion ein Öffnen der Fahrertür ist.

11. Steuerverfahren nach einem der Ansprüche 1 bis 7, **dadurch gekennzeichnet, dass** dann, wenn das Starten ein erneutes Starten ist, die Bedingungen vor dem Starten ohne Aktion des Fahrzeugführers bestimmt werden.

12. Steuerverfahren nach Anspruch 11, **dadurch gekennzeichnet, dass** die Vorbedingungen getrennt oder in Kombination eine Detektion einer Geschwindigkeit des Fahrzeugs, die höher als ein gegebener Wert ist, eine Anforderung zum erneuten Starten, die von einem System zum Überwachen einer Batterie des Fahrzeugs stammt, eine Anforderung zum erneuten Starten, die eine Funktion eines Klimatisierungssystems des Fahrzeugs ist, und eine Anforderung zum erneuten Starten, die eine Funktion eines Bremssystems des Fahrzeugs ist, sind.

13. Steuerverfahren nach Anspruch 12, **dadurch gekennzeichnet, dass** es einen zusätzlichen Schritt des Schickens einer Anforderung zum erneuten Starten der Brennkraftmaschine umfasst, falls das Klimatisierungssystem während einer Stillstandsphase der Brennkraftmaschine in Betrieb genommen wird, wenn es während des Stillstands ausgeschaltet war.

14. Steuerverfahren nach Anspruch 12, **dadurch gekennzeichnet, dass** es einen zusätzlichen Schritt des Verbietens des Schickens einer Anforderung zum erneuten Starten der Brennkraftmaschine während einer gegebenen Dauer umfasst, wenn das Klimatisierungssystem beim Stillstand der Brennkraftmaschine in Betrieb war.

15. Steuerverfahren nach Anspruch 14, **dadurch gekennzeichnet, dass** das Klimatisierungssystem ein Lufttemperatursensor am Ausgang eines Verdampfers des Klimatisierungssystems umfasst und dass das Verfahren einen zusätzlichen Schritt des Schickens einer Anforderung zum erneuten Starten der Brennkraftmaschine umfasst, falls die Temperatur der Luft am Ausgang des Verdampfers höher als ein gegebener Wert ist.

16. Steuerverfahren nach Anspruch 14, **dadurch gekennzeichnet, dass** es einen zusätzlichen Schritt des Schickens einer Anforderung zum erneuten Starten der Brennkraftmaschine umfasst, falls die Temperatur des Fahrgastraums des Fahrzeugs nach einem Stillstand der Brennkraftmaschine um einen gegebenen Wert ansteigt.

17. Steuerverfahren nach Anspruch 14, **dadurch gekennzeichnet, dass** es einen zusätzlichen Schritt des Schickens einer Anforderung zum erneuten Starten der Brennkraftmaschine am Ende einer gegebenen Stillstandsdauer umfasst.

18. Steuerverfahren nach einem der vorhergehenden Ansprüche, **dadurch gekennzeichnet, dass** ein Befehl zum Starten nicht ausgeführt wird, falls die Brennkraftmaschine bereits gestartet ist.

19. Steuerverfahren nach Anspruch 18, **dadurch gekennzeichnet, dass** es einen zusätzlichen Schritt des Konfigurierens der Maschine in der Generatorbetriebsart umfasst, falls die Brennkraftmaschine bereits gestartet ist.

20. Steuerverfahren nach einem der vorhergehenden Ansprüche, **dadurch gekennzeichnet, dass** es einen zusätzlichen Schritt umfasst, in dem:
- Startbefehle mittels eines Zählers gezählt werden,
- der Zähler bei jedem Startbefehl bis zu einem Maximalwert, oberhalb dessen jeder Startbefehl verboten ist, um eine Einheit inkrementiert wird,
- der Zähler pro gegebener ZeitintervallScheibe um eine Einheit dekrementiert wird.

21. Steuerverfahren nach Anspruch 20, **dadurch gekennzeichnet, dass** zwei aufeinander folgende Startbefehle durch ein gegebenes Zeitintervall getrennt sind.

22. Steuerverfahren nach einem der Ansprüche 20 oder 21, **dadurch gekennzeichnet, dass** es einen zusätzlichen Schritt umfasst, in dem:
- der Startbefehl an die drehende elektrische Maschine übertragen wird, wenn der Zähler niedriger als der ausgeschlossene Maximalwert ist.

23. Steuerverfahren nach einem der Ansprüche 20 bis 22, **dadurch gekennzeichnet, dass** es einen zusätzlichen Schritt umfasst, in dem:
- der Startbefehl an einen zusätzlichen Starter übertragen wird, wenn der Zähler den Maximalwert erreicht hat.

24. Vorrichtung zum Steuern einer drehenden elektrischen Maschine für Kraftfahrzeug, wobei die Maschine dazu bestimmt ist, in einer Starterbetriebsart zu arbeiten, um eine Brennkraftmaschine des Fahrzeugs zu starten, **dadurch gekennzeichnet, dass** sie Folgendes umfasst:
- erste Mittel zum Prüfen vor der Startphase von sogenannten Bedingungen vor dem Starten, die nur zum Zeitpunkt der Startanforderung verifiziert werden, wobei die ersten Mittel dafür ausgelegt sind, eine Ausführung der Startphase im Fall einer negativen Prüfung der Vorbedingungen zu verbieten und die Gültigkeit der Bedingungen vor dem Starten während einer gegebenen Gültigkeitsdauer im Fall einer positiven Prüfung der Vorbedingungen aufrecht zu erhalten,
- zweite Mittel zum Prüfen vor und während jeder Startphase sogenannter Sicherheitsbedingungen, die ständig verifiziert werden müssen, und
wobei die zweiten Mittel dafür ausgelegt sind, eine Ausführung der Startphase im Fall einer negativen Prüfung der Sicherheitsbedingungen jederzeit zu verbieten oder zu unterbrechen.

25. Umkehrbare drehende elektrische Maschine, die eine Vorrichtung zum Ausführen des Verfahrens nach den Ansprüchen 1 bis 23 umfasst.

## Claims

1. Method for controlling a rotary electric machine for a motor vehicle, the said machine being intended to operate in starter mode for starting a combustion engine of the said vehicle, **characterized in that** it comprises the steps of:
- prior to the said start phase, testing conditions referred to as start prerequisites, which are checked only at the time of the demand to start, and
if the test on the said prerequisites is negative, preventing the start phase from being executed,
if the test on the said prerequisites is positive, keeping the start prerequisites valid for a given period of validity,
- prior to and throughout a start phase, testing conditions referred to as safety requisites, which have to be checked constantly, and
if the test on the said safety requisites is negative, preventing or interrupting execution of the said start phase at any moment.

2. Control method according to Claim 1, **characterized in that** the rotary electric machine is intended to operate in generator mode to supply power to an onboard network of the said motor vehicle.

3. Control method according to either one of the preceding claims, **characterized in that** when the start is a first start, one safety requisite is a minimum period of time separating two consecutive start commands.

4. Control method according to any one of the preceding claims, **characterized in that** when the start is a first start, one start prerequisite is a minimum time of action on an ignition key of the vehicle.

5. Control method according to any one of the preceding claims, **characterized in that** when the start is a restart, the said safety requisites are, considered separately or in combination, a minimum period of time between two consecutive restart commands and that the bonnet of the vehicle is in the closed position.

6. Control method according to Claim 5, **characterized in that** it comprises an additional step of invalidating the said safety requisite of the bonnet of the vehicle being in the closed position in the event of action on an ignition key of the vehicle.

7. Control method according to any one of the preceding claims, **characterized in that** when the start is a restart, the said start prerequisites are determined by at least one intentional action on the part of the driver of the vehicle.

8. Control method according to Claim 7, **characterized in that** the said intentional action is an action on an ignition key of the vehicle for a given minimum length of time, an action on a means that activates/deactivates the control to start using the electric machine, an action on a clutch pedal of the vehicle or an action on an accelerator pedal of the vehicle.

9. Control method according to any one of Claims 1 to 7, **characterized in that** when the start is a restart, the said start prerequisites are determined by at least one non-deliberate action on the part of the driver of the vehicle.

10. Control method according to Claim 9, **characterized in that** the said non-deliberate action is an opening of the driver's door.

11. Control method according to any one of Claims 1 to 7, **characterized in that** when the start is a restart, the said start prerequisites are determined without any action on the part of the driver.

12. Control method according to Claim 11, **characterized in that** the said prerequisites are, considered separately or in combination, a detection that a vehicle speed is above a given value, a restart request coming from a system that monitors a battery of the vehicle, a restart request dependent on an air conditioning system of the vehicle and a restart request dependent on a braking system of the vehicle.

13. Control method according to Claim 12, **characterized in that** it comprises an additional step of sending out a request to restart the combustion engine if the air conditioning system is switched on while the combustion engine is stopped if it was off at the time of the stop.

14. Control method according to Claim 12, **characterized in that** it comprises an additional step of preventing a combustion engine restart request from being sent out for a given period of time if the air conditioning system was running at the time the combustion engine was stopped.

15. Control method according to Claim 14, **characterized in that** the air conditioning system comprises a sensor sensing the temperature of the air leaving an evaporator of the air conditioning system and **in that** the said method comprises an additional step of sending out a request to restart the combustion engine if the temperature of the said air leaving the evaporator is above a given value.

16. Control method according to Claim 14, **characterized in that** it comprises an additional step of sending out a request to restart the combustion engine if the temperature of the vehicle interior increases by a given amount after the combustion engine has been stopped.

17. Control method according to Claim 14, **characterized in that** it comprises an additional step of sending out a request to restart the combustion engine after it has been stopped for a given period of time.

18. Control method according to any one of the preceding claims, **characterized in that** a restart command is not executed if the combustion engine has already started.

19. Control method according to Claim 18, **characterized in that** it comprises an additional step of configuring the said machine in generator mode if the combustion engine has already started.

20. Control method according to any one of the preceding claims, **characterized in that** it comprises an additional step of:
- counting the start commands using a counter,
- incrementing the said counter by one unit upon each start command up to a maximum value beyond which any start command is forbidden,
- and decrementing the said counter by one unit per given time interval.

21. Control method according to Claim 20, **characterized in that** two consecutive start commands are separated by a given time interval.

22. Control method according to one of Claims 20 and 21, **characterized in that** it comprises an additional step of:
- transmitting the start command to the rotary electric machine when the counter is below the excluded maximum value.

23. Control method according to one of Claims 20 to 22, **characterized in that** it comprises an additional step of:
- transmitting the start command to an additional starter when the counter has reached the maximum value.

24. Device for controlling a rotary electric machine for a motor vehicle, the said machine being intended to operate in starter mode for starting a combustion engine of the said vehicle, **characterized in that** it comprises:
- first means for testing, prior to the said start phase, conditions referred to as start prerequisites, which are checked only at the time of the demand to start,
the said first means being able to prevent the start phase from being executed if the test on the said prerequisites is negative, and to keep the start prerequisites valid for a given period of validity if the test on the said prerequisites is positive,
- second means for testing, prior to and throughout a start phase, conditions referred to as safety requisites which have to be checked constantly, and
the said second means being able at any time to prevent or interrupt execution of the said start phase if the test on the said safety requisites is negative.

25. Reversible rotary electric machine comprising a device for implementing the method according to Claims 1 to 23.
